# EUROPEAN PATENT SPECIFICATION

(11) **EP 1 545 212 B1**
(45) Date of publication and mention of the grant of the patent: **29.10.2008**
(21) Application number: 03792277.0
(22) Date of filing: 07.08.2003
(51) Int. Cl.: A01N 47/36, A01N 37/40

(54) **HERBICIDAL COMPOSITION**
HERBIZIDE ZUSAMMENSETZUNGEN
COMPOSITION HERBICIDE

(30) Priority: 08.08.2002 CH 138002
(43) Date of publication of application: 29.06.2005
(73) Proprietor: Syngenta Participations AG, 4058 Basel (CH)
(72) Inventor: KOTZIAN, Georg R., Syngenta Crop Protection AG, CH-4058 Basel (CH)
(74) Representative: Palmer, Sarah Louise
(86) International application number: PCT/EP2003/008791
(87) International publication number: WO 2004/017737

(56) References cited:
- WO-A-01/35741
- WO-A-01/39597

## Description

The present invention relates to a herbicidal synergistic composition comprising a herbicidal active ingredient combination that is suitable for the selective control of weeds in crops of useful plants, for example in crops of cereals.

The invention relates also to a method of controlling weeds in crops of useful plants and to the use of the composition for that purpose.

The compound bromoxynil exhibits herbicidal action, as is described, for example, in The Pesticide Manual, 12th Edition (BCPC), 2000. Tritosulfuron, registered as No. 142469-14-5 in CAS (Chemical Abstracts), is known from EP-A-559 814 and WO 01/24633, in which the herbicidal action of the compound is described.

WO 01/35741 describes herbicidal synergistic active substance combinations comprising tritosulfuron, one or more of ten herbicidal compounds listed as 'Group I' and optionally one or more herbicides selected from a second group, which includes bromoxynil.

Surprisingly, it has now been found that a combination of variable amounts of tritosulfuron and bromoxynil as active ingredients exhibit a synergistic action that is capable of controlling, both pre-emergence and post-emergence, the majority of weeds occurring especially in crops of useful plants, without appreciably damaging the useful plant.

There is therefore proposed in accordance with the present invention a novel synergistic composition for the selective control of weeds, which consists of as active ingredient a mixture of
a) at least one compound selected from tritosulfuron, flufenacet and propoxycarbazone (sodium), and
b) a synergistically effective amount of bromoxynil

It is extremely surprising that combinations of the afore-mentioned active ingredients exceed the additive effect on the weeds to be controlled that is to be expected in principle and thus broaden the range of action of both active ingredients especially in two respects: firstly, the rates of application of the individual compounds are reduced while a good level of action is maintained and, secondly, the composition according to the invention achieves a high level of weed control also in those cases where the individual substances, in the low rates of application range, have become useless from the agronomic standpoint. The result is a considerable broadening of the spectrum of weeds and an additional increase in selectivity in respect of the crops of useful plants, as is necessary and desirable in the event of an unintentional overdose of active ingredient. The composition according to the invention, while retaining excellent control of weeds in crops of useful plants, also allows greater flexibility in succeeding crops.

The composition according to the invention can be used against a large number of agronomically important weeds, such as Stellaria, Nasturtium, Agrostis, Digitaria, Avena, Setaria, Sinapis, Lolium, Solanum, Bromus, Apera, Alopecurus, Matricaria, Abutilon, Sida, Xanthium, Amaranthus, Chenopodium, Ipomoea, Chrysanthemum, Galium, Viola and Veronica. The composition according to the invention is suitable for all methods of application conventionally used in agriculture, e.g. pre-emergence application, post-emergence application and seed dressing. The composition according to the invention is suitable especially for controlling weeds in crops of useful plants, such as cereals and maize, and very especially for controlling weeds in cereals. "Crops of useful plants" are to be understood to mean also those which have been made tolerant to herbicides or classes of herbicides as a result of conventional methods of breeding or genetic engineering methods.

The composition according to the invention comprises the mentioned active ingredients in any mixing ratio, but usually has an excess of one component over the other. Preferred mixing ratios of the active ingredients are from 100:1 to 1:100 and 50:1 to 1:50.

The rate of application may vary within wide limits and depends on the nature of the soil, the method of application (pre- or post-emergence; seed dressing; application to the seed furrow; no tillage application etc.), the crop plant, the weed to be controlled, the prevailing climatic conditions, and other factors governed by the method of application, the time of application and the target crop. The active ingredient mixture according to the invention can generally be applied at a rate of from 0.001 to 1.5 kg of active ingredient mixture per ha.

The mixtures according to the invention may be used in unmodified form, that is to say as obtained in the synthesis. Preferably, however, they are formulated in customary manner, together with the adjuvants conventionally used in formulation technology, such as solvents, solid carriers or surfactants, for example into emulsifiable concentrates, directly sprayable or dilutable solutions, wettable powders, soluble powders, dusts, granules or microcapsules, as is described in WO 97/34483, pages 9 to 13. As with the nature of the compositions, the methods of application, such as spraying, atomising, dusting, wetting, scattering or pouring, are chosen in accordance with the intended objectives and the prevailing circumstances. The formulations, i.e. the compositions, preparations or products comprising the mixtures according to the invention, and also, where appropriate, one or more solid or liquid formulation adjuvants, are prepared in a manner known *per se,* e.g. by intimately mixing and/or grinding the active ingredients with the formulation adjuvants, e.g. solvents or solid carriers. In addition, surface-active compounds (surfactants) may also be used in the preparation of the formulations.

Examples of solvents and solid carriers are given, for example, in WO 97/34485, page 6. Depending on the nature of the active ingredients to be formulated, suitable surface-active compounds are non-ionic, cationic and/or anionic surfactants and surfactant mixtures having good emulsifying, dispersing and wetting properties. Examples of suitable anionic, non-ionic and cationic surfactants are listed, for example, in WO 97/34485, pages 7 and 8. Also suitable in the preparation of the herbicidal compositions according to the invention are the surfactants conventionally used in formulation technology, which are described, *inter alia,* in "McCutcheon's Detergents and Emulsifiers Annual" MC Publishing Corp., Ridgewood New Jersey, 1981, Stache, H., "Tensid-Taschenbuch", Carl Hawser Verlag, Munich/Vienna, 1981 and M. and J. Ash, "Encyclopedia of Surfactants", Vol I-III, Chemical Publishing Co., New York, 1980-81.

The herbicidal formulations usually contain from 0.1 to 99 % by weight, especially from 0.1 to 95 % by weight, of active ingredient mixture, from 1 to 99.9 % by weight of a solid or liquid formulation adjuvant, and from 0 to 25 % by weight, especially from 0.1 to 25 % by weight, of a surfactant.

Whereas concentrates are usually preferred as commercial products, the end user will normally employ dilute formulations. The compositions may also comprise further ingredients, such as stabilisers, e.g. vegetable oils or epoxidised vegetable oils (epoxidised coconut oil, rapeseed oil or soybean oil), antifoams, e.g. silicone oil, preservatives, viscosity regulators, binders, tackifiers, and also fertilisers or other active ingredients. Preferred formulations have especially the following compositions: (% = percent by weight)

| Emulsifiable concentrates: | |
|---|---|
| active ingredient mixture: | 1 to 90 %, preferably from 5 to 20 % |
| surface-active agent: | 1 to 30 %, preferably from 10 to 20 % |
| liquid carrier: | 5 to 94 %, preferably from 70 to 85 % |

| Dusts: | |
|---|---|
| active ingredient mixture: | 0.1 to 10 %, preferably 0.1 to 5 % |
| solid carrier: | 99.9 to 90 %, preferably 99.9 to 99 % |

| Suspension concentrates: | |
|---|---|
| active ingredient mixture: | 5 to 75 %, preferably from 10 to 50 % |
| water: | 94 to 24 %, preferably from 88 to 30 % |
| surface-active agent: | 1 to 40 %, preferably from 2 to 30 % |

| Wettable powders: | |
|---|---|
| active ingredient mixture: | 0.5 to 90 %, preferably from 1 to 80 % |
| surface-active agent: | 0.5 to 20 %, preferably from 1 to 15 % |
| solid carrier: | 5 to 95 %, preferably from 15 to 90 % |

| Granules: | |
|---|---|
| active ingredient mixture: | 0.1 to 30 %, preferably from 0.1 to 15 % |
| solid carrier: | 99.5 to 70 %, preferably from 97 to 85 % |

The Examples that follow illustrate the invention further. They do not limit the invention.

| F1. Emulsifiable concentrates | a) | b) | c) | d) |
|---|---|---|---|---|
| active ingredient mixture | 5 % | 10 % | 25 % | 50 % |
| calcium dodecylbenzenesulfonate | 6 % | 8 % | 6 % | 8 % |
| castor oil polyglycol ether (36 mol of ethylene oxide) | 4 % | - | 4 % | 4 % |
| octylphenol polyglycol ether (7-8 mol of ethylene oxide) | - | 4 % | - | 2 % |
| cyclohexanone | - | - | 10 % | 20 % |
| aromatic C₉-C₁₂hydrocarbon mixture | 85 % | 78 % | 55 % | 16 % |

Emulsions of any desired concentration can be prepared from such concentrates by dilution with water.

| F2. Solutions | a) | b) | c) | d) |
|---|---|---|---|---|
| active ingredient mixture | 5 % | 10 % | 50 % | 90 % |
| 1-methoxy-3-(3-methoxy-propoxy)-propane | - | 20 % | 20 % | - |
| polyethylene glycol (mol. wt. 400) | 20 % | 10 % | - | - |
| N-methyl-2-pyrrolidone | - | - | 30 % | 10 % |
| aromatic C₉-C₁₂hydrocarbon mixture | 75 % | 60 % | - | - |

The solutions are suitable for application in the form of micro-drops.

| F3. Wettable powders | a) | b) | c) | d) |
|---|---|---|---|---|
| active ingredient mixture | 5 % | 25 % | 50 % | 80 % |
| sodium lignosulfonate | 4 % | - | 3 % | - |
| sodium lauryl sulfate | 2 % | 3 % | - | 4 % |
| sodium diisobutylnaphthalenesulfonate | - | 6 % | 5 % | 6 % |
| octylphenol polyglycol ether | - | 1 % | 2 % | - |
| (7-8 mol of ethylene oxide) highly dispersed silicic acid | 1 % | 3 % | 5 % | 10 % |
| kaolin | 88 % | 62 % | 35 % | - |

The active ingredient is mixed thoroughly with the adjuvants and the mixture is thoroughly ground in a suitable mill, affording wettable powders which can be diluted with water to give suspensions of any desired concentration.

| F4. Coated granules | a) | b) | c) |
|---|---|---|---|
| active ingredient mixture | 0.1 % | 5 % | 15 % |
| highly dispersed silicic acid | 0.9 % | 2 % | 2 % |
| inorganic carrier material (diameter 0.1 - 1 mm) for example CaCO₃ or SiO₂ | 99.0 % | 93 % | 83 % |

The active ingredient is dissolved in methylene chloride, the solution is sprayed onto the carrier, and the solvent is subsequently evaporated off *in vacuo*.

| F5. Coated granules | a) | b) | c) |
|---|---|---|---|
| active ingredient mixture | 0.1 % | 5 % | 15 % |
| polyethylene glycol (mol. wt. 200) | 1.0 % | 2 % | 3 % |
| highly dispersed silicic acid | 0.9 % | 1 % | 2 % |
| inorganic carrier material (diameter 0.1 - 1 mm) for example CaCO₃ or SiO₂ | 98.0 % | 92 % | 80 % |

The finely ground active ingredient is uniformly applied, in a mixer, to the carrier material moistened with polyethylene glycol, yielding non-dusty coated granules.

| F6. Extruder granules | a) | b) | c) | d) |
|---|---|---|---|---|
| active ingredient mixture | 0.1% | 3 % | 5 % | 15 % |
| sodium lignosulfonate | 1.5% | 2 % | 3 % | 4 % |
| carboxymethylcellulose | 1.4 % | 2 % | 2 % | 2% |
| kaolin | 97.0 % | 93 % | 90 % | 79% |

The active ingredient is mixed with the adjuvants, and the mixture is ground, moistened with water, extruded and then dried in a stream of air.

| F7. Dusts | a) | b) | c) |
|---|---|---|---|
| active ingredient mixture | 0.1 % | 1 % | 5 % |
| talcum | 39.9 % | 49 % | 35% |
| kaolin | 60.0 % | 50 % | 60% |

Ready-to-use dusts are obtained by mixing the active ingredient with the carriers and grinding the mixture in a suitable mill.

| F8. Suspension concentrates | a) | b) | c) | d) |
|---|---|---|---|---|
| active ingredient mixture | 3 % | 10 % | 25% | 50 % |
| ethylene glycol | 5 % | 5 % | 5 % | 5 % |
| nonylphenol polyglycol ether (15 mol of ethylene oxide) | - | 1 % | 2 % | - |
| sodium lignosulfonate | 3 % | 3 % | 4 % | 5 % |
| carboxymethylcellulose | 1 % | 1 % | 1 % | 1 % |
| 37 % aqueous formaldehyde solution | 0.2 % | 0.2 % | 0.2 % | 0.2 % |
| silicone oil emulsion | 0.8 % | 0.8 % | 0.8 % | 0.8 % |
| water | 87.0 % | 79.0 % | 62.0 % | 38.0% |

The finely ground active ingredient is intimately mixed with the adjuvants, giving a suspension concentrate from which suspensions of any desired concentration can be obtained by dilution with water.

It is often more practical to formulate the active ingredients of the mixtures according to the invention separately and then, shortly before application, to bring them together in the applicator in the desired mixing ratio in the form of a "tank mixture" in water.

### Biological Examples:

### Example B1: Pre-emergence test:

The test plants are sown in pots under greenhouse conditions. A standard soil is used as cultivation substrate. At a pre-emergence stage, the herbicides, both on their own and in admixture, are applied to the surface of the soil. The rates of application depend on the optimum concentrations ascertained under field conditions or greenhouse conditions. The tests are evaluated after from 2 to 4 weeks (100 % action = plant is completely dead; 0 % action = no phytotoxic action). The mixtures used in this test show good results.

### Example B2: Post-emergence test:

The test plants are grown in pots under greenhouse conditions until a post-application stage. A standard soil is used as cultivation substrate. At a post-emergence stage, the herbicides, both on their own and in admixture, are applied to the test plants. The rates of application depend on the optimum concentrations ascertained under field conditions or greenhouse conditions. The tests are evaluated after from 2 to 4 weeks (100 % action = plant is Completely dead; 0 % action = no phytotoxic action). The mixtures used in this test show good results.

## Claims

1. An herbicidal formulation comprising from 0.1 to 99% by weight of active ingredient mixture, from 1 to 99.9% by weight of a solid or liquid formulation adjuvant, and from 0 to 25% by weight of a surfactant, wherein said active ingredient mixture consists of a) tritosulfuron, and b) a synergistically effective amount of bromoxynil.

2. An herbicidal synergistic composition consisting of as active ingredients a mixture of a) tritosulfuron, and
b) a synergistically effective amount of bromoxynil.

3. A method of controlling undesired plant growth in a crop of useful plants, which comprises applying a herbicidal formulation according to claim 1 or a herbicidal synergistic composition according to claim 2, to the crop or the area of cultivation thereof at a rate of from 0.001 to 1.5kg of active ingredient mixture per hectare.

4. A method according to claim 3, wherein the crop plant is a cereal.

5. A process for making a synergistic herbicidal composition, said composition consisting of as active ingredients a mixture of tritosulfuron and bromoxynil, said process comprising combining tritosulfuron with bromoxynil.

6. Use of bromoxynil to enhance in a synergistic manner the herbicidal activity of a composition comprising tritosulfuron.

7. Use of tritosulfuron to enhance in a synergistic manner the herbicidal activity of a composition comprising bromoxynil.

## Patentansprüche

1. Herbizidformulierung, umfassend von 0,1 bis 99 Gew.% eines Wirkstoffgemisches, von 1 bis 99,9 Gew.% eines festen oder flüssigen Formulierungshilfsstoffs und von 0 bis 25 Gew.% eines Tensids, worin das Wirkstoffgemisch aus a) Tritosulfuron und b) einer synergistisch wirksamen Menge von Bromoxynil besteht.

2. Synergistische Herbizidzusammensetzung, bestehend aus einem Gemisch aus a) Tritosulfuron und b) einer synergistisch wirksamen Menge von Bromoxynil als Wirkstoffe.

3. Verfahren zum Kontrollieren von unerwünschtem Pflanzenwachstum in einem Bestand von Nutzpflanzen, das das Anwenden einer Herbizidformulierung gemäß Anspruch 1 oder einer synergistischen Herbizidzusammensetzung gemäß Anspruch 2 auf den Bestand oder die Kultivierungsfläche davon in einer Menge von 0,001 bis 1,5 kg an Wirkstoffgemisch pro Hektar umfaßt.

4. Verfahren gemäß Anspruch 3, worin die Kulturpflanze eine Getreidepflanze ist.

5. Verfahren zum Herstellen einer synergistischen Herbizidzusammensetzung, wobei die Zusammensetzung aus einem Gemisch aus Tritosulfuron und Bromoxynil als Wirkstoffe besteht, und wobei das Verfahren das Vereinigen von Tritosulfuron mit Bromoxynil umfaßt.

6. Verwendung von Bromoxynil zum Steigern der Herbizidwirkung einer Zusammensetzung umfassend Tritosulfuron in einer synergistischen Weise.

7. Verwendung von Tritosulfuron zum Steigern der Herbizidwirkung einer Zusammensetzung umfassend Bromoxynil in einer synergistischen Weise.

## Revendications

1. Formulation herbicide comprenant de 0,1 à 99 % en masse de mélange d'ingrédients actifs, de 1 à 99,9 % en masse d'un adjuvant de formulation solide ou liquide et de 0 à 25 % en masse d'un tensioactif, où ledit mélange d'ingrédients actifs consiste en a) tritosulfuron et b) une quantité efficace du point de vue synergique de bromoxynil.

2. Composition synergique herbicide consistant en, comme ingrédients actifs, un mélange de a) tritosulfuron et b) une quantité efficace du point de vue synergique de bromoxynil.

3. Procédé de maîtrise de la croissance de plantes indésirables dans une culture de plantes utiles, qui comprend l'application d'une formulation herbicide selon la revendication 1 ou d'une composition synergique herbicide selon la revendication 2 à la culture ou à sa zone de culture à un taux de 0,001 à 1,5 kg de mélange d'ingrédients actifs par hectare.

4. Procédé selon la revendication 3 où la plante cultivée est une céréale.

5. Procédé pour produire une composition herbicide synergique, ladite composition consistant en, comme ingrédients actifs, un mélange de tritosulfuron et de bromoxynil, ledit procédé comprenant la combinaison de tritosulfuron avec du bromoxynil.

6. Utilisation du bromoxynil pour augmenter d'une manière synergique l'activité herbicide d'une composition comprenant du tritosulfuron,

7. Utilisation du tritosulfuron pour augmenter d'une manière synergique l'activité herbicide d'une composition comprenant du bromoxynil.
